# FASCICULE DE BREVET EUROPEEN

(11) **EP 1 777 494 B1**
(45) Date de publication et mention de la délivrance du brevet: **09.07.2008**
(21) Numéro de dépôt: 06291588.9
(22) Date de dépôt: 11.10.2006
(51) Int. Cl.: G01B 21/04

(54) **Système de repérage positionnel d'une machine tridimensionnelle de mesure ou d'usinage dans un référentiel fixe**
System zur Bestimmung der Lage einer 3D Koordinatenmessmaschine oder einer Bearbeitungsmaschine in einem ortsfesten Bezugssystem
System for finding the position of a 3D coordinate measuring machine or of a machining apparatus in a fixed reference system

(30) Priorité: 21.10.2005 FR 0510745
(43) Date de publication de la demande: 25.04.2007
(73) Titulaire: ROMER, 41800 Montoire Sur Le Loir (FR)
(72) Inventeur: Granger, Romain, 41800 Lavardin (FR)
(74) Mandataire: Jaunez, Xavier

(56) Documents cités:
- EP-A- 0 398 073
- FR-A- 2 721 395
- FR-A- 2 776 373
- US-A- 4 961 267
- US-A1- 2001 024 283

## Description

La présente invention concerne un système de repérage positionnel d'une machine tridimensionnelle de mesure ou d'usinage dans un référentiel fixe.

La machine tridimensionnelle concernée pourra être indifféremment une machine de mesure notamment à bras articulés, ou une machine d'usinage, en particulier une fraiseuse multi-axes.

### ARRIERE-PLAN DE L'INVENTION

Dans le domaine particulier des véhicules automobiles, on peut avoir besoin de repérer différents points d'une carrosserie de véhicule automobile accidentée ou en cours de montage, afin d'effectuer un contrôle de sa géométrie en repérant des points prédéterminés de ladite carrosserie au moyen d'un dispositif de mesure tridimensionnel associé à un bâti de référence, plus communément appelé "marbre". De même, dans le cas d'un robot d'usinage, il est intéressant de pouvoir facilement repérer les points de la carrosserie de véhicule automobile qui nécessitent un usinage particulier, tel que fraisage ou perçage.

On pourra à ce titre se référer aux documents FR-A-2 740 546 et FR-A-2 764 992 de la demanderesse.

On a également proposé des systèmes de repérage positionnel utilisant un module d'émission portant une source de rayon lumineux montée sur un socle pouvant pivoter autour de deux axes distincts non parallèles entre eux, avec deux capteurs de position angulaire associés au mouvement de rotation correspondant de la source par rapport au socle, une pluralité de cibles étant disposées autour du module d'émission en des emplacements définis par rapport à un référentiel fixe, comme décrit dans le document WO-A-95/35479. On pourra également se référer au document US-A-6 611 346 (US - 2001/0024283 A1) de la demanderesse, dans lequel est décrit un système de repérage positionnel utilisant des douilles interactives qui sont intégrées dans la paroi de support.

Les systèmes précités donnent toute satisfaction au niveau de la précision, mais restent très contraignants lorsque la machine de mesure ou d'usinage doit être fréquemment déplacée par rapport à l'objet mesuré, en particulier une carrosserie de véhicule automobile.

En effet, il convient de recommencer à chaque fois le processus de repérage pour connaître la machine dans le référentiel de la pièce, ou la pièce dans le référentiel de la machine.

Pour compléter l'arrière-plan technologique, on peut citer les documents US-A-4 961 267 et EP-A-0 398 073 qui illustrent des systèmes de repérage en deux dimensions (2D), le premier système n'étant d'ailleurs pas autonome mais associé à demeure à un plateau de support, et le second utilisant un ensemble coulissant du type tige-cylindre, ainsi que le document FR-A-2 776 373 de la demanderesse qui illustre un autre système à chariot coulissant sur un rail monté pour pivoter autour d'au moins un axe.

### OBJET DE L'INVENTION

L'invention a pour but de concevoir un système de repérage positionnel ne présentant pas les inconvénients des systèmes précités, et qui soit en particulier agencé pour permettre des déplacements fréquents de la machine de mesure ou d'usinage par rapport à la pièce concernée, sans rencontrer les contraintes mentionnées plus haut.

### DEFINITION GENERALE DE L'INVENTION

Le problème technique précité est résolu conformément à l'invention grâce à un système de repérage positionnel d'une machine tridimensionnelle de mesure ou d'usinage dans un référentiel fixe, ladite machine reposant sur une paroi essentiellement plane associée à un socle de machine le système comportant un ensemble multi-axes à deux bras articulés accouplés, ledit ensemble multi-axes étant équipé de codeurs angulaires intégrés mesurant les angles de rotation respectifs autour de chacun de ses axes, ledit système comportant :
- une première embase destinée à reposer en un point repéré de la paroi de support associée au socle de machine, ladite embase étant équipée supérieurement d'une plate-forme d'appui à indexage angulaire autour d'un axe central qui est perpendiculaire à ladite paroi de support lorsque ladite première embase est en place ;
- une deuxième embase, identique à la première embase, destinée à reposer en un point repéré d'une surface de support associée au référentiel fixe ;
- l' ensemble multi-axes comportant en outre deux bases d'extrémité accouplées auxdits bras et dont les faces inférieures sont adaptées pour un appui direct et repéré angulairement sur la plate-forme d'appui de l'une respective des première et deuxième embases, chaque base d'extrémité ayant un axe principal qui est confondu avec l'axe central de l'embase concernée lorsque ladite base d'extrémité est en place.

Ainsi, si le socle de la machine est déplacé, par exemple en roulant sur une surface de plancher, l'ensemble multi-axes à deux bras articulés se déforme naturellement en suivant le déplacement dudit socle, et tous ces déplacements sont automatiquement calculés grâce aux codeurs angulaires intégrés dans l'ensemble multi-axes. On dispose alors d'un système suiveur qui procure une souplesse optimale.

De préférence, la première embase est fixée sur le socle de machine, et la deuxième embase est fixée sur une barre horizontale elle-même fixée sur une surface de plancher. En particulier, la barre horizontale est agencée pour recevoir une pluralité de deuxièmes embases, notamment une deuxième embase au voisinage de chacune de ses extrémités. Ainsi, dans le cas d'une pièce de carrosserie automobile, on pourra fixer une telle barre sous la carrosserie de façon que les extrémités de ladite barre dépassent de la largeur de ladite carrosserie, la mise en place de l'ensemble multi-axes pouvant alors être très rapidement effectuée d'un côté ou de l'autre de cette carrosserie.

Conformément à un mode d'exécution avantageux, l'ensemble multi-axes est à sept axes, et est équipé de sept codeurs angulaires intégrés associés.

Avantageusement alors, l'ensemble multi-axes comporte une chape d'extrémité articulée reliant un bras à la première base d'extrémité, une chape d'extrémité articulée reliant l'autre bras à la deuxième base d'extrémité, et une chape centrale articulée reliant les deux bras entre eux.

On pourra alors prévoir que chaque bras comporte un tronçon central constitué par un tube creux intercalé entre deux tronçons de bras dont l'un reçoit le codeur angulaire mesurant l'angle de rotation autour de l'axe longitudinal dudit bras. Avantageusement alors, chaque tronçon central est choisi parmi un jeu de tubes creux de longueurs différentes.

Il sera par ailleurs intéressant de prévoir que les liaisons entre chaque tronçon central et les tronçons de bras associés sont des liaisons d'accouplement à démontage rapide, et que la liaison entre chaque chape d'extrémité et la base d'extrémité associée est une liaison vissée à démontage rapide.

De préférence enfin, chaque base d'extrémité est équipée d'un boîtier de commande et/ou d'alimentation autonome.

D'autres caractéristiques et avantages de l'invention apparaîtront plus clairement à la lumière de la description qui va suivre et des dessins annexés, concernant un mode d'exécution particulier.

### BREVE DESCRIPTION DES DESSINS

Il sera fait référence aux figures des dessins annexés où:
- la figure 1 est une vue en perspective illustrant un système de repérage positionnel conforme à l'invention associé à une machine tridimensionnelle d'usinage destinée à travailler sur une carrosserie de véhicule automobile représentée schématiquement ;
- la figure 2 illustre le même système après déplacement du socle de la machine par rapport à la carrosserie de véhicule automobile, l'ensemble multi-axes à deux bras articulés accouplés s'étant alors déformé en suivant le déplacement dudit socle ;
- la figure 3 est une vue analogue illustrant une barre horizontale supportant deux embases, en vue d'une mise en place du système de repérage et d'un travail de la machine d'usinage d'un côté ou de l'autre de la carrosserie de véhicule automobile ;
- la figure 4 est une vue en perspective illustrant le système de repérage positionnel isolé, dont les bras forment un angle aigu ;
- la figure 5 est une vue analogue à la précédente, montrant une autre conformation de l'ensemble multi-axes à deux bras, dont les bras forment un angle obtus ;
- la figure 6 est une vue analogue à celle de la figure 4, mais montrant les composants principaux en vue éclatée, afin notamment d'illustrer la structure modulaire des deux bras de l'ensemble multi-axes ;
- la figure 7 est une vue en perspective illustrant une embase du système de repérage positionnel selon l'invention, qui est surmontée d'une plaque inférieure d'appui faisant partie d'une base d'extrémité du système de repérage ;
- la figure 8 est une vue analogue à celle de la figure 7, montrant la plaque d'appui en position sur l'embase associée.

### DESCRIPTION DETAILLEE DU MODE DE REALISATION PREFERE

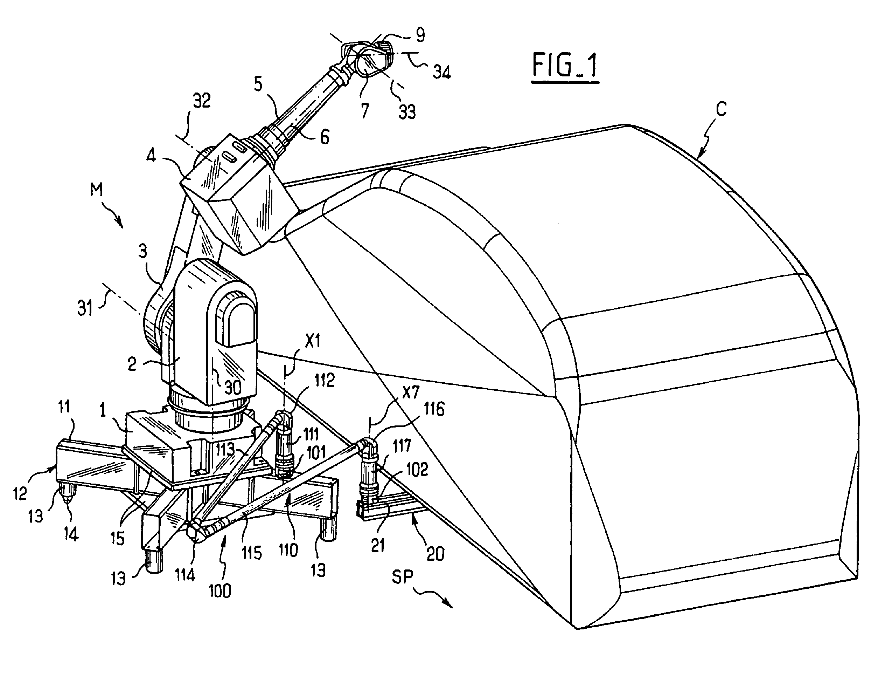

La figure 1 permet de distinguer une machine tridimensionnelle M à bras articulés, qui est en l'espèce un robot de fraisage destiné à intervenir sur une carrosserie de véhicule automobile C.

La machine d'usinage M comporte une base 1 surmontée d'une tourelle 2 pouvant tourner autour d'un axe essentiellement vertical 30, et équipée d'un bras 3 monté pour pivoter autour d'un axe essentiellement horizontal 31. Le bras 3 est à son tour équipé d'un ensemble fonctionnel 4 monté pour pivoter autour d'un axe 32, et présentant un bras 5 d'axe longitudinal 6, ledit bras se terminant par une chape 7 montée pour tourner autour de l'axe 6, et également autour d'un axe transversal 33. La chape d'extrémité 7 est enfin équipée d'un outil d'usinage 9, par exemple une fraise rotative, montée pour tourner autour d'un axe 34.

La base 1 de la machine M repose sur une paroi essentiellement plane 11 qui est associée à un socle de machine 12, ici réalisé sous la forme d'un ensemble cruciforme, avec des plots d'extrémité 13 se terminant par des éléments de roulement 14, le socle 12 en forme de croisillon cruciforme étant serré inférieurement et supérieurement par des plaques 15 assurant une fixation stable de la base 1 de la machine M.

Sous la carrosserie de véhicule C, on distingue une barre horizontale 20 présentant supérieurement une surface de support 21 qui est associée au référentiel fixe, la barre horizontale 20 étant elle-même fixée sur une surface de plancher SP.

On va maintenant décrire plus en détail le système de repérage positionnel noté 100 conforme à l'invention, qui permet de repérer la machine M dans un référentiel fixe, et ce même en cas de déplacement du socle 12 de ladite machine. Comme cela est visible sur la figure 1, il est prévu une première embase 101 destinée à reposer en un point repéré de la paroi de support 11 associée au socle de machine 12, ladite embase étant équipée supérieurement d'une plate-forme d'appui à indexage angulaire autour d'un axe central et perpendiculaire à ladite paroi de support lorsque ladite première embase est en place. En l'espèce, cette première embase 101 est fixée, en particulier boulonnée, sur l'une des branches du socle 12 cruciforme. L'axe central précité est alors confondu avec un axe X1 qui est ici vertical.

Une deuxième embase 102, identique à la première embase 101, est également prévue, en étant destinée à reposer en un point repéré de la surface de support 21 associée au référentiel fixe. L'axe central de cette deuxième embase 102 est alors confondu avec un axe X7, qui est ici également vertical.

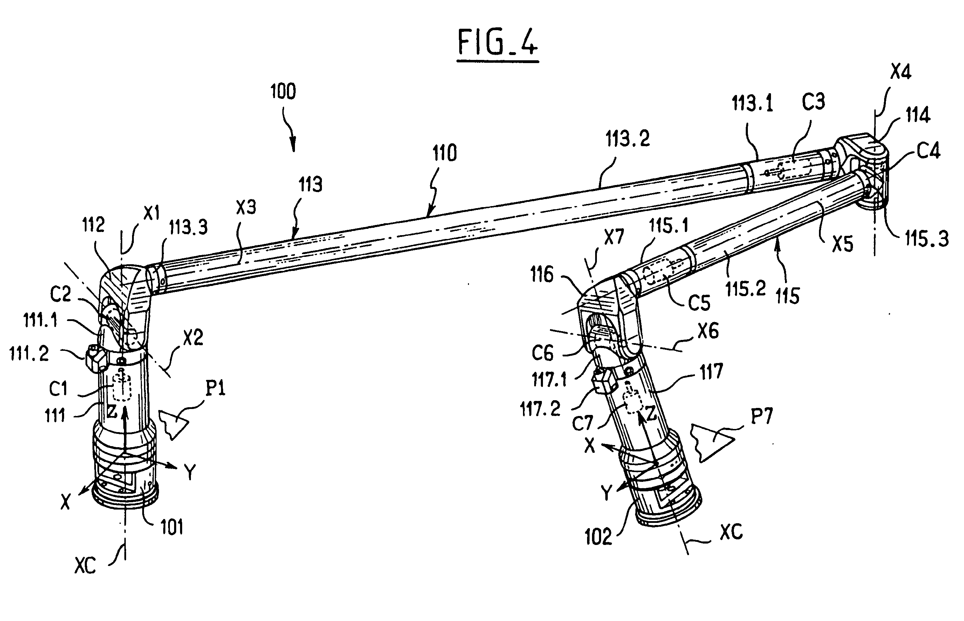

Comme on le verra par la suite en référence à la figure 4, le système de repérage permet une utilisation avec des embases 101, 102 en appui sur des plans qui ne sont pas parallèles entre eux, auquel cas les axes X1 et X7 précités ne sont pas parallèles.

Le système de repérage positionnel 100 comporte également, en plus des embases 101 et 102, un ensemble multi-axes 110 à deux bras articulés accouplés 113, 115 et à deux bases d'extrémité 111, 117 accouplées auxdits bras. En l'espèce, l'ensemble multi-axes 110 est à sept axes, et il comporte une chape d'extrémité articulée 112 reliant le bras 113 à la première base d'extrémité 111, une chape d'extrémité articulée 116 reliant l'autre bras 115 à la deuxième base d'extrémité 117, et une chape centrale articulée 114 reliant les deux bras 113, 115 entre eux.

Les faces inférieures des bases d'extrémité 111, 117 sont adaptées pour un appui direct et repéré angulairement sur la plate-forme d'appui de l'une respective des première et deuxième embases 101, 102, et chaque base d'extrémité 111, 117 a un axe principal X1, X7 qui est confondu avec l'axe central de l'embase 101, 102 concernée lorsque ladite base d'extrémité est en place. De plus, comme cela sera exposé plus en détail ci-après, l'ensemble multi-axes 110 est en outre équipé de codeurs angulaires intégrés mesurant les angles de rotation respectifs autour de chacun de ses axes, c'est-à-dire en l'espèce sept codeurs angulaires intégrés associés à chacun des sept axes.

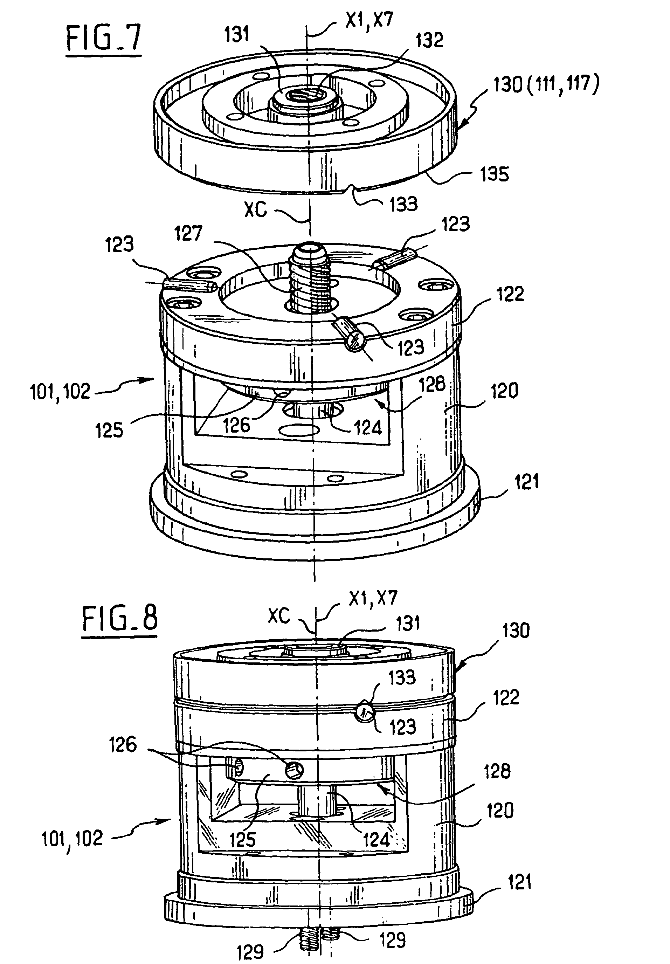

Pour une meilleure compréhension de l'appui de chaque base d'extrémité sur une embase 101 ou 102, on va se référer aux figures 7 et 8.

L'embase 101 ou 102 comporte un corps cylindrique 120 d'axe central XC, présentant une semelle d'appui 121 avec des moyens de boulonnage 129 sur la surface d'appui associée, en l'espèce la face supérieure 21 de la barre horizontale 20 précitée ou la surface d'appui 11 associée au socle 12 de la machine M. Le corps cylindrique 120 est surmonté d'une plate-forme d'appui 122, dont la face supérieure est équipée de trois doigts 123 disposés à 120°, et dont la surface est en saillie par rapport au plan de la face supérieure de ladite plate-forme d'appui. L'embase 101 ou 102 comporte en outre un arbre central 124 monté pour tourner autour de l'axe central XC, et présentant une extrémité filetée extérieurement 127 qui débouche supérieurement. L'arbre 124 peut être mis en rotation autour de son axe XC grâce à un organe de manoeuvre 125, qui est accessible par une fenêtre 128, et peut être déplacé grâce aux perçages radiaux 126 permettant l'insertion d'un outil adapté.

On distingue également sur les figures 7 et 8 une plaque 130 qui est en fait le composant inférieur de chaque base d'extrémité 111 ou 117. La plaque 130 comporte un moyeu central 131 avec un filetage intérieur 132 adapté pour un vissage sur le filetage 127 de l'arbre 124. La face inférieure 135 de la plaque 130 présente trois encoches en V 133 destinées à coopérer avec les trois doigts 123 précités. En position d'appui, comme cela est illustré sur la figure 8, la plaque 130 repose par ses encoches en V 133 sur les trois doigts 123, sans contact entre les faces annulaires en regard. La fixation est assurée par un vissage de la partie filetée 127, jusqu'à un serrage assurant un repérage précis garantissant l'isostatisme, et assurant la précision du repérage par rapport à la surface d'appui. Ainsi, une fois les deux bases d'extrémité 111, 117 fixées et repérées sur les embases 101, 102, on dispose d'un système articulé qui peut être déformé au gré des déplacements du socle 12 de la machine M. Les codeurs angulaires intégrés dans l'ensemble multi-axes 110 permettent de mesurer automatiquement les angles de rotation respectifs autour de chacun des axes concernés, de sorte qu'il est inutile de réinitialiser le processus de repérage à chaque déplacement du socle de la machine.

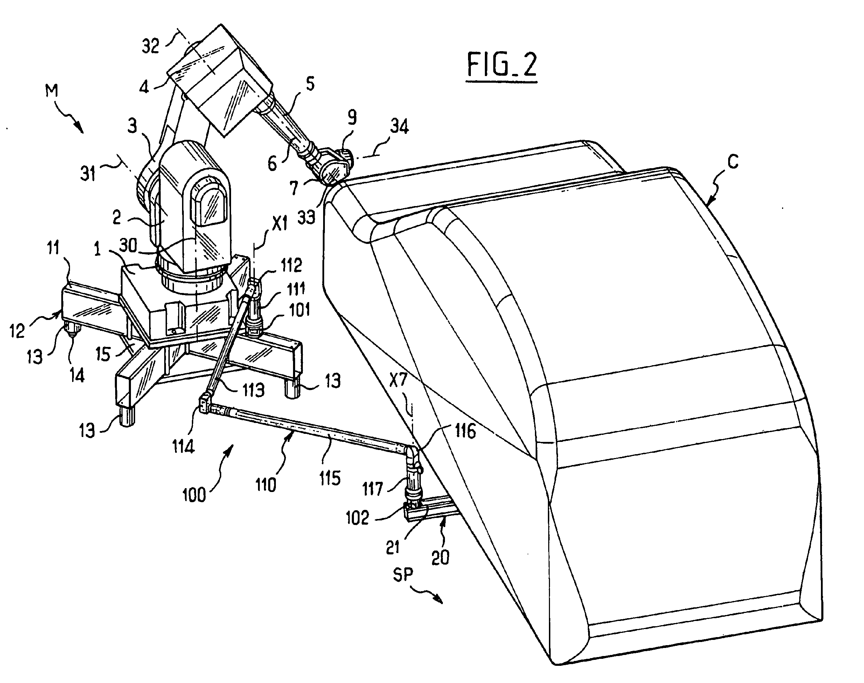

La figure 2 illustre ainsi une nouvelle configuration de l'ensemble multi-axes 110 dont les bras articulés accouplés 113, 115 forment maintenant un angle obtus.

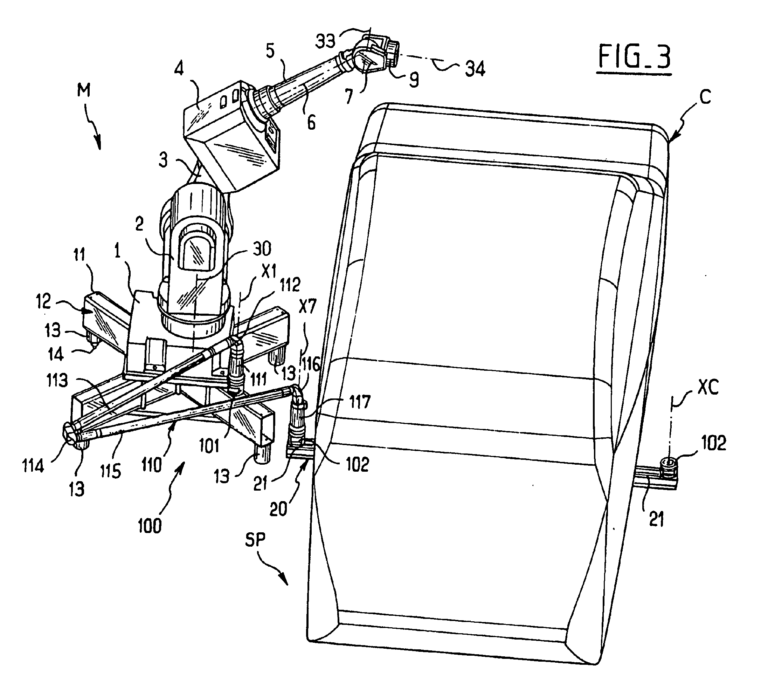

Pour plus de commodité, comme cela est illustré sur la figure 3, il sera prévu que la barre horizontale 20 supporte une autre deuxième embase 102 au voisinage de son autre extrémité. Ainsi, lorsque l'on veut changer de côté d'intervention pour la machine d'usinage, il suffit de désaccoupler la base d'extrémité 117 de son embase 102, puis de déplacer l'ensemble associé au socle de la machine, et enfin de repositionner cette base d'extrémité 117 sur l'autre embase 102 qui est déjà en place sur l'autre extrémité de la barre horizontale 20.

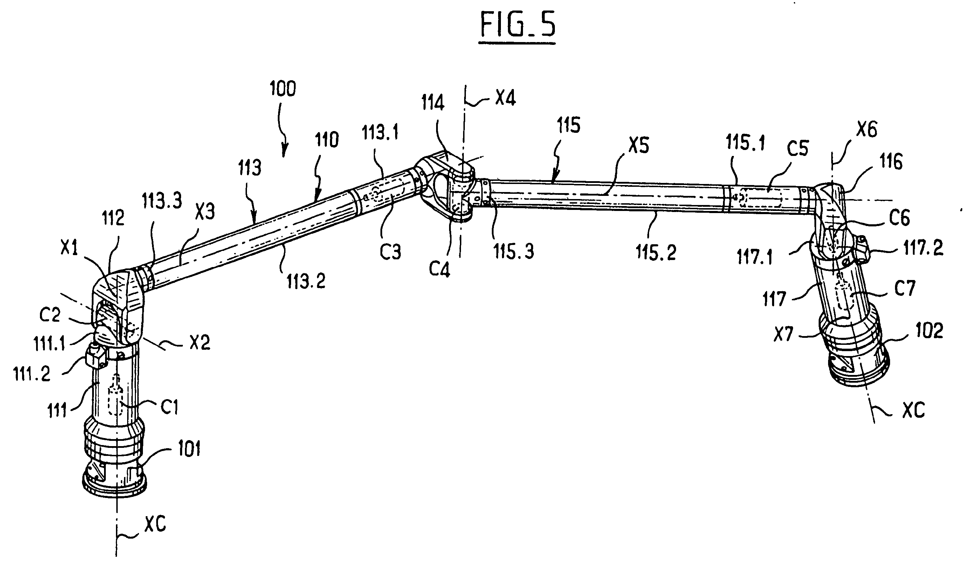

Les figures 4 et 5 permettent de mieux distinguer les composants du système de réglage positionnel 100, qui ont été pour la plupart précédemment décrits.

On distingue ainsi, en partant de la première embase 101, la base d'extrémité 111 dont la face inférieure est en appui direct et repéré angulairement sur la plate-forme d'appui de l'embase 101, le plan d'appui étant schématisé en P1. La base d'extrémité 111 comporte un codeur intégré C1 pour mesurer la rotation de son extrémité 111.1 autour de l'axe X1 de ladite base d'extrémité. La chape d'extrémité articulée 112 peut pivoter autour d'un axe X2, l'angle de rotation étant mesuré par un codeur intégré C2. On trouve ensuite le bras 113, dont l'autre extrémité est reliée à une chape 114 pouvant tourner autour de l'axe X3 dudit bras, l'angle de rotation étant mesuré par un capteur intégré C3. L'autre bras 115 est articulé sur la chape 114 en pouvant tourner autour d'un axe X4, l'angle de rotation étant mesuré par un codeur intégré C4 associé à la chape centrale articulée 114. L'autre extrémité du bras 115 est raccordée à la chape d'extrémité articulée 116, qui peut tourner autour de l'axe X5 du bras, l'angle de rotation étant mesuré par le codeur intégré C5. La chape d'extrémité 116 peut tourner autour d'un axe X6 sur la partie haute 117.1 de la base d'extrémité 117, l'angle de rotation étant mesuré par un codeur intégré C6. Enfin, la partie haute 117.1 de la base d'extrémité 117 peut tourner par rapport à ladite base autour d'un axe X7, l'angle de rotation étant mesuré par un codeur intégré C7. La face inférieure de la base d'extrémité 117 est en appui direct et repéré angulairement sur la plate-forme d'appui de la deuxième embase 102, le plan d'appui étant repéré par un plan P7 qui, sur les figures 4 et 5, n'est pas parallèle au plan P1.

L'ensemble précité permet d'avoir un repérage du référentiel X, Y, Z associé à la machine, c'est-à-dire en l'espèce à la première embase 101, par rapport à un référentiel fixe X, Y, Z, en l'espèce associé à la deuxième embase 102.

On distingue également sur les figures 4 et 5, des boîtiers 111.2, 117.2 qui correspondent à la commande et/ou l'alimentation autonome des bases d'extrémité 111 et 117 respectivement. De préférence, on utilisera des moyens de transmission sans fil (WIFI ou autres) afin d'éviter la présence contraignante de câbles de liaison.

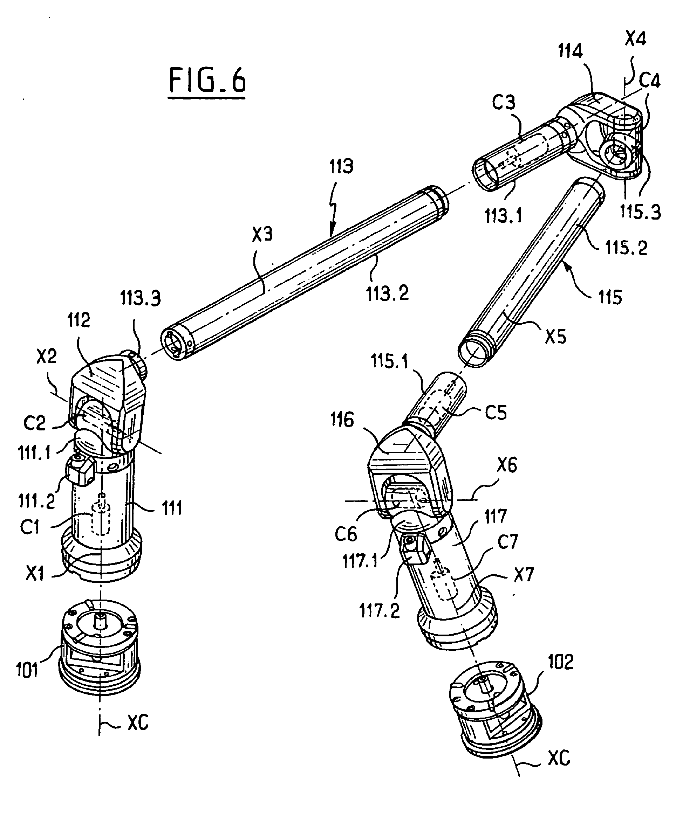

La vue éclatée de la figure 6 permet de mieux distinguer les composants séparés, et en particulier de mieux appréhender l'agencement ici modulaire des deux bras 113, 115.

En effet, chaque bras 113, 115 comporte un tronçon central constitué par un tube creux 113.2, 115.2 intercalé entre deux tronçons de bras 113.1, 113.3 et 115.1, 115.3 dont l'un (113.1, 115.1) reçoit le codeur angulaire intégré C3, C5 mesurant l'angle de rotation autour de l'axe longitudinal X3, X5 dudit bras.

Pour profiter au maximum des avantages d'une telle modularité, on pourra prévoir que chaque tronçon central 113.2, 115.2 est choisi parmi un jeu de tubes creux de longueurs différentes. Ceci permet de s'adapter avec une très grande flexibilité à la situation concernée.

Il sera également avantageux de prévoir que les liaisons entre chaque tronçon central 113.2, 115.2 et les tronçons de bras associés 113.1, 113.3 et 115.1, 115.3 sont des liaisons d'accouplement à démontage rapide. Ceci permet alors soit de ranger aisément l'ensemble multi-axes dans une valise, soit de remplacer un tube creux par un autre tube de longueur différente, et ce à la fois rapidement et sans avoir à réinitialiser le système.

Comme cela a été exposé plus haut, la liaison entre chaque chape d'extrémité 112, 116 et la base d'extrémité associée 111, 117 est quant à elle une liaison vissée à démontage rapide.

On est ainsi parvenu à réaliser un système de repérage positionnel procurant une très grande souplesse, et évitant d'avoir à recommencer les mesures chaque fois que l'on déplace le socle de la machine. Il devient maintenant possible de déplacer ad libitum le socle de la machine sans avoir à se préoccuper du positionnement correct du capteur de mesure ou de l'outil d'usinage associé à ladite machine par rapport à l'objet, en particulier la carrosserie de véhicule automobile.

On aura compris que les deux embases peuvent être en appui sur des plans non parallèles ou de niveaux décalés, l'ensemble multi-axes se déformant aisément en trois dimensions pour suivre les déplacement du socle de la machine.

L'invention n'est pas limitée au mode de réalisation qui vient d'être décrit, mais englobe au contraire toute variante reprenant, avec des moyens équivalents, les caractéristiques essentielles énoncées plus haut.

En particulier, bien que cela n'ait pas été illustré ici, on pourra prévoir des moyens additionnels de support visant à faciliter le maintien des bras dans une position sensiblement horizontale, sans affaissement au niveau de la chape centrale sous l'effet du poids, ce qui sera en général intéressant dans le cas de bras de grande longueur. Ces moyens pourront par exemple comporter une roulette omnidirectionnelle agencée sous la chape centrale et/ou pour l'un au moins des deux bras, un système latéral de support à barre parallèle au bras et à ressort ou vérin d'assistance, comme illustré dans le document US-A-5 189 797 de la demanderesse.

## Revendications

1. Système de repérage positionnel d'une machine tridimensionnelle de mesure ou d'usinage dans un référentiel fixe, ladite machine reposant sur une paroi essentiellement plane associée à un socle de machine, le système comportant un ensemble multi-axes (110) à deux bras articulés accouplés (113, 115), ledit ensemble multi-axes (110) étant équipé de codeurs angulaires intégrés (C1 à C7) mesurant les angles de rotation respectifs autour de chacun de ses axes (X1 à X7), **caractérisé en ce que** :
- le système comporte une première embase (101) destinée à reposer en un point repéré de la paroi de support (11) associée au socle de machine (12), ladite embase étant équipée supérieurement d'une plate-forme d'appui (122) à indexage angulaire autour d'un axe central (XC) qui est perpendiculaire à ladite paroi de support lorsque ladite première embase est en place ;
- le système comporte une deuxième embase (102), identique à la première embase (101), destinée à reposer en un point repéré d'une surface de support (21) associée au référentiel fixe;
- l'ensemble multi-axes (110) comporte en outre deux bases d'extrémité (111, 117) accouplées auxdits bras et dont les faces inférieures (135) sont adaptées pour un appui direct et repéré angulairement sur la plate-forme d'appui (122) de l'une respective des première et deuxième embases (101, 102), chaque base d'extrémité (111; 117) ayant un axe principal (X1; X7) qui est confondu avec l'axe central (XC) de l'embase (101; 102) concernée lorsque ladite base d'extrémité est en place.

2. Système selon la revendication 1, **caractérisé en ce que** la première embase (101) est fixée sur le socle de machine (12), et la deuxième embase (102) est fixée sur une barre horizontale (20) elle-même fixée sur une surface de plancher (SP).

3. Système selon la revendication 2, **caractérisé en ce que** la barre horizontale (20) est agencée pour recevoir une pluralité de deuxièmes embases (102).

4. Système selon la revendication 3, **caractérisé en ce que** la barre horizontale (20) supporte une deuxième embase (102) au voisinage de chacune de ses extrémités.

5. Système selon l'une quelconque des revendications 1 à 4, **caractérisé en ce que** l'ensemble multi-axes (110) est à sept axes (X1 à X7), et est équipé de sept codeurs angulaires intégrés associés (C1 à C7).

6. Système selon la revendication 5, **caractérisé en ce que** l'ensemble multi-axes (110) comporte une chape d'extrémité articulée (112) reliant un bras (113) à la première base d'extrémité (111), une chape d'extrémité articulée (116) reliant l'autre bras (115) à la deuxième base d'extrémité (117), et une chape centrale articulée (114) reliant les deux bras (113, 115) entre eux.

7. Système selon la revendication 6, **caractérisé en ce que** chaque bras (113 ; 115) comporte un tronçon central constitué par un tube creux (113.2 ; 115.2) intercalé entre deux tronçons de bras (113.1, 113.3 ; 115.1, 115.3) dont l'un (113.1 ; 115.1) reçoit le codeur angulaire (C3; C5) mesurant l'angle de rotation autour de l'axe longitudinal (X3; X5) dudit bras.

8. Système selon la revendication 7, **caractérisé en ce que** chaque tronçon central (113.2, 115.2) est choisi parmi un jeu de tubes creux de longueurs différentes.

9. Système selon la revendication 7 ou la revendication 8, **caractérisé en ce que** les liaisons entre chaque tronçon central (113.2, 115.2) et les tronçons de bras associés (113.1, 113.3 ; 115.1, 115.3) sont des liaisons d'accouplement à démontage rapide.

10. Système selon l'une quelconque des revendications 6 à 9, **caractérisé en ce que** la liaison entre chaque chape d'extrémité (112 ; 116) et la base d'extrémité associée (111 ; 117) est une liaison vissée à démontage rapide.

11. Système selon l'une des revendications 1 à 10, **caractérisé en ce que** chaque base d'extrémité (111 ; 117) est équipée d'un boîtier de commande et/ou d'alimentation autonome (112.2 ; 117.2).

## Claims

1. A system for identifying the position of a three-dimensional machine for measuring or machining in a fixed frame of reference, said machine resting on an essentially plane support wall associated with a machine stand, the system comprising a multi-axis assembly (110) having two hinged arms (113, 115) that are coupled together, said multi-axis assembly (110) being fitted with integrated angle encoders (C1 to C7) measuring the respective angles of rotation about each of its axes (X1 to X7), **characterized in that**:
. the system comprises a first base (101) for resting at an identified point of the support wall (11) associated with the machine stand (12), said base being fitted on its top with a bearing platform (122) providing angular indexing about a central axis (XC) that is perpendicular to said support wall when said first base is in place;
. the system comprises a second base (102) identical to the first base (101), for resting at an identified point on a support surface (21) associated with the fixed frame of reference; and
. the multi-axis assembly (110) further has two endpieces (111, 117) that are coupled to said arms and that have bottom faces (135) that are adapted to bear directly in an angularly-identified position on the bearing platform (122) of a respective one of the first and second bases (101, 102), each endpiece (111; 117) having a main axis (X1; X7) that coincides with the central axis (XC) of the corresponding base (101; 102) when said endpiece is in place.

2. A system according to claim 1, **characterized in that** the first base (101) is secured to the machine stand (12), and the second base (102) is secured to a horizontal bar (20) itself secured to a floor surface (SP).

3. A system according to claim 2, **characterized in that** the horizontal bar (20) is arranged to receive a plurality of second bases (102).

4. A system according to claim 3, **characterized in that** the horizontal bar (20) supports a second base (102) in the vicinity of each of its ends.

5. A system according to any one of claims 1 to 4, **characterized in that** the multi-axis assembly (110) has seven axes (X1 to X7), and is fitted with seven associated integrated angle encoders (C1 to C7).

6. A system according to claim 5, **characterized in that** the multi-axis assembly (110) includes a hinged end fork (112) connecting one arm (113) to the first endpiece (111), a hinged end fork (116) connecting the other arm (115) to the second endpiece (117), and a central hinged fork (114) interconnecting the two arms (113, 115).

7. A system according to claim 6, **characterized in that** each arm (113; 115) comprises a central segment constituted by a hollow tube (113.2; 115.2) interposed between two arm segments (113.1, 113.3; 115.1, 115.3), one of which (113.1; 115.1) receives the angle encoder (C3; C5) measuring the angle of rotation about the longitudinal axis (X3; X5) of said arm.

8. A system according to claim 7, **characterized in that** each central segment (113.2, 115.2) is selected from a set of hollow tubes of different lengths.

9. A system according to claim 7 or claim 8, **characterized in that** the connections between each central segment (113.2, 115.2) and the associated arm segments (113.1, 113.3; 115.1, 115.3) are via quick-release couplings.

10. A system according to any one of claims 6 to 9, **characterized in that** the connection between each end fork (112; 116) and the associated endpiece (111; 117) is a quick-release screw connection.

11. A system according to any one of claims 1 to 10, **characterized in that** each endpiece (111; 117) is fitted with a self-contained control and/or power supply unit (112.2; 117.2).

## Patentansprüche

1. System zur Bestimmung der Lage einer dreidimensionalen Mess- oder Bearbeitungsmaschine in einem ortsfesten Bezugssystem, wobei die Maschine auf einer im Wesentlichen ebenen Fläche ruht, die mit einem Maschinenfuß verbunden ist, wobei das System eine Mehrachsen-Einheit (110) mit zwei angekoppelten Gelenkarmen (113, 115) umfasst, wobei die genannte Mehrachsen-Einheit (110) mit integrierten Winkelkodierern (C1 bis C7) ausgerüstet ist, die die jeweiligen Drehwinkel um jede ihrer Achsen (X1 bis X7) messen, **dadurch gekennzeichnet, dass**:
- das System einen ersten Sockel (101) umfasst, der dazu bestimmt ist, an einem Bezugspunkt der Trägerfläche (11), die mit dem Maschinenfuß (12) verbunden ist, zu ruhen, wobei der Sockel oben mit einer Auflageplattform (122) mit Winkelindexierung um eine zentrale Achse (XC) versehen ist, die senkrecht zur genannten Trägerfläche ist, wenn der erste Sockel am Platz ist,
- das System einen zweiten Sockel (102) umfasst, der identisch zum ersten Sockel (101) und dazu bestimmt ist, an einem Bezugspunkt einer Trägerfläche (21) zu ruhen, die mit dem ortsfesten Bezugssystem verbunden ist,
- die Mehrachsen-Einheit (110) ferner zwei Endbasen (111, 117) umfasst, die an die genannten Arme angekoppelt sind und deren Unterflächen (135) dazu geeignet sind, direkt und mit bestimmter Winkelstellung auf der Auflageplattform (122) des ersten bzw. zweiten Sockels (101, 102) aufzuliegen, wobei jede Endbasis (111; 117) eine Hauptachse (X1; X7) hat, die mit der zentralen Achse (XC) des betreffenden Sockels (101; 102) zusammenfällt, wenn die genannte Endbasis am Platz ist.

2. System nach Anspruch 1, **dadurch gekennzeichnet, dass** der erste Sockel (101) auf dem Maschinenfuß (12) befestigt ist und der zweite Sockel (102) auf einem horizontalen Balken (20) befestigt ist, der selbst auf einer Bodenfläche (SP) befestigt ist.

3. System nach Anspruch 2, **dadurch gekennzeichnet, dass** der horizontale Balken (20) so ausgebildet ist, dass er eine Vielzahl von zweiten Sockeln (102) aufnehmen kann.

4. System nach Anspruch 3, **dadurch gekennzeichnet, dass** der horizontale Balken (20) nahe jedem seiner Enden einen zweiten Sockel (102) trägt.

5. System nach einem der Ansprüche 1 bis 4, **dadurch gekennzeichnet, dass** die Mehrachsen-Einheit (110) sieben Achsen (X1 bis X7) hat und mit sieben dazugehörigen integrierten Winkelkodierern (C1 bis C7) ausgestattet ist.

6. System nach Anspruch 5, **dadurch gekennzeichnet, dass** die Mehrachsen-Einheit (110) einen angelenkten Stirngabelkopf (112) umfasst, der einen Arm (113) mit der ersten Endbasis (111) verbindet, einen angelenkten Stirngabelkopf (116), der den anderen Arm (115) mit der zweiten Endbasis (117) verbindet, sowie einen angelenkten zentralen Gabelkopf (114), der die beiden Arme (113, 115) miteinander verbindet.

7. System nach Anspruch 6, **dadurch gekennzeichnet, dass** jeder Arm (113; 115) einen zentralen Abschnitt umfasst, der aus einem Hohlrohr (113.2; 115.2) gebildet ist, das zwischen zwei Armabschnitte (113.1, 113.3; 115.1, 115.3) eingefügt ist, von denen einer (113.1; 115.1) den Winkelkodierer (C3; C5) aufnimmt, der den Drehwinkel um die Längsachse (X3; X5) des Arms misst.

8. System nach Anspruch 7, **dadurch gekennzeichnet, dass** jeder zentrale Abschnitt (113.2, 115.2) unter einem Satz von Hohlrohren unterschiedlicher Länge ausgewählt wird.

9. System nach Anspruch 7 oder Anspruch 8, **dadurch gekennzeichnet, dass** die Verbindungen zwischen jedem zentralen Abschnitt (113.2, 115.2) und den dazugehörigen Armabschnitten (113.1, 113.3; 115.1, 115.3) schnelldemontierbare Kopplungsverbindungen sind.

10. System nach einem der Ansprüche 6 bis 9, **dadurch gekennzeichnet, dass** die Verbindung zwischen jedem Stirngabelkopf (112; 116) und der dazugehörigen Endbasis (111; 117) eine schnelldemontierbare Schraubverbindung ist.

11. System nach einem der Ansprüche 1 bis 10, **dadurch gekennzeichnet, dass** jede Endbasis (111; 117) mit einem autonomen Steuergehäuse und/oder Versorgungsgehäuse (112.2; 117.2) ausgestattet ist.
